# EUROPEAN PATENT SPECIFICATION

(11) **EP 1 914 200 B1**
(45) Date of publication and mention of the grant of the patent: **08.01.2014**
(21) Application number: 07118803.1
(22) Date of filing: 18.10.2007
(51) Int. Cl.: C01B 35/12

(54) **Calcined tincal production method by calcination autogenic grinding and separation (CASG) method in a single step**
Verfahren zur Herstellung von kalziniertem Tinkal durch Kalzinierung, autogene Zerkleinerung und Trennung in einem einzigen Schritt
Méthode de production de borax brut cuit par calcination, broyage autogène et séparation en une seule étape

(30) Priority: 17.05.2007 TR 200703372; 20.10.2006 TR 200605914
(43) Date of publication of application: 23.04.2008
(73) Proprietor: Eti Maden Isletmeleri Genel Mudurlugu, Ankara 06440 (TR)
(72) Inventor: Yilmaz, Orhan, 06440 Ankara (TR); Yalcinoglu, Yucel, 06440 Ankara (TR); Ergul, Tanzer, 06440 Ankara (TR); Uludag, Tumay, 06440 Ankara (TR); Senturk, Bilal, 06440 Ankara (TR); Akcin, Hasan, 06440 Ankara (TR); Kayandan, Ibrahim, 06440 Ankara (TR); Demirbag, Celal, 06440 Ankara (TR)
(74) Representative: Dericioglu Kurt, Ekin

(56) References cited:
- US-A- 4 031 354
- US-A- 4 041 132
- US-A- 4 412 978

## Description

### This invention;

relates to production of micronized calcined tincal having a high content as a result of a succession of procedures consisting of: hardening of earth minerals due to lose of water during subjecting coarse tincal ore (Na₂B₄O₇.10H₂O) to heat treatment in rotary furnace with flights; forming of swollen soft, expanded structure of tincal ore caused by calcination and consequently being calcined followed by purification from impurities in a high rate in a way subjecting calcined tincal to pneumatic separation procedure by means of hot air used for calcination process after autogenic grinding effect of dried and hardened clays on swollen ore and obtaining micronized calcined tincal with high efficiency. The invention also relates to the production of compacted calcined tincal product with increased density in the second step as result of compacting micronized calcined tincal with low density under pressure.

### Background of the Invention

The United States patent document no. US4031354, an application in the state of the art, discloses a rotary inclined tubular drier for puffing or expanding borax and a process for the production of puffed or expanded borax beads of desired physical characteristics. A rotatable tube is mounted on bearing wheels and surrounded by a fixed, close-fitting, insulated tube having electrical heating elements running lengthwise attached to its inside wall. The rotatable tube is fed continuously with granular borax feedstock by a vibratory feeder from its higher end and the puffed borax is discharged into a discharge chute from the lower end of the tube. A counter current of dry air is maintained by a suction hood at the high end of the tube, and borax is prevented from adhering to the interior of the tube by an adjustable, spring-loaded, internal scraper. The temperature of the drier is controlled by means of a pyrometer incorporated into a scraper support rod on the interior of the tube. Puffed borax beads of particularly desirable characteristics for detergent use are produced from sodium tetraborate pentahydrate by heating the drier to 220 DEG -450 DEG F and adjusting the angle of incline and rate of rotation so as to provide a 45-90 second residence time in the drier for the borax.

### Detailed Description of the Invention

| **Raw material** | **:** Run of tincal mine ore crushed to <50 mm, |
|---|---|
| Chemical formulation | : Na₂B₄O₇.10H₂O |
| Content | : 20-28 % B₂O₃ |
| Bulk Density | : 1.3 gr/cm³ |
| Particle Size | : <50 mm |
| Moisture | : *3-8* % |
| Crystal Water | : 10 mol H₂O |
| Impurity content | : 25-45 % |

### Products Obtained:

### 1^{st} step: Micronized Calcined Tincal

| | |
|---|---|
| Chemical Formulation | : Na₂B₄O₇.(1-5)H₂O |
| Content | : 45-62 % B₂O₃ |
| Bulk density | : 0.15-0.3 gr/cm³ |
| Particle Size | : <250 micron |
| Moisture | : 0-0,6 % |
| Crystal Water | : 1-5 mol H₂O |
| Impurity content | : 3-12% |

### 2^{nd} step: Compacted calcined Tincal

| | |
|---|---|
| Chemical formulation | : Na₂B₄O₇.(1-5)H₂O |
| Content | : 45-62 % B₂O₃ |
| Bulk density | : 0.75-1,0 gr/cm³ |
| Particle size | : <6 mm (size may be adjusted.) |
| Moisture | : 0-0,6 % |
| Crystal water | : 1-5 mol H₂O |
| Impurity content | : 3-12% |

### 1^{st} Step: Method for Production of Micronized Calcined Tincal;

The production of micronized calcined tincal with high content of B₂O₃ is accomplished by the method in which the earth mineral material hardens due to lose of water contained in the ore during calcinations of coarse tincal ore in a rotary furnace with flights, tincal ore has a brittle structure as a result of loss of moisture and water content and consequently expansion, expanded tincal is crushed by autogenic grinding impact of clay hardened in rotary furnace, micronized calcined tincal with low density is purified from the clay (impurities) in a high rate by subjecting to pneumatic separation by means of hot air used for calcination process.

### Industrial Application of Production of Micronized Calcined Tincal Production by Calcination Autogenic Grinding and Separation Method in a Single Step

### List of machines and equipment used in production of micronized calcined tincal (Figurel/2)

1 Run of mine ore feeding hopper
2 Waste output of furnace
2.1 Calcination kiln
3 Chimney exit at the end of furnace
4 Dust cyclone
5 Bag filter
6 Burner
7 Funnel for releasing into atmosphere
8 Air Fan

A calcination process is required to produce a micron size calcined tincal having 1-5 moles of crystal water. Interior design of the calcination furnace is important as affecting production quantity and quality. There must be flights swirling grains of ore inside the furnace attached to the liner of the furnace. These flights must be mounted at the interior lining of the furnace along the furnace as strips by intervals.

Inclination and rotation speed of the furnace are among the factors affecting the time for staying within the furnace and thickness of the liner and quantity of supply as well, thus production quantity and quality are also affected.

Preheating of equipment used in process is required prior to start of production.

Coarse tincal ore is prepared for calcination after it was crushed into pieces of a particle size <25 mm; however it may be calcined by being crushed into larger) a particle size (<50 mm). Crushed coarse tincal ore is charged into the feeding hopper (**1**) and the process is put into operation.

The furnace is subjected to preheating by clean air sucked from the ambient air by a fan (**8**) and a burner (6) with temperature control in a process control manner. Calcination kiln (**2.**1) is arranged to thermal regime before charging.

According to crystal water rate of micronized calcined tincal to be produced (1-5 moles), operation temperature levels of the process are adjusted to the temperature ranges defined in the following and these temperature parameters are controlled by an automatic control system continuously. So, temperature values in the system are as follows:

| | Minimum | maximum |
|---|---|---|
| Furnace entry (hot head) | : 300 °C | 550 °C |
| Middle of Furnace | : 130 °C | 450 °C |
| Furnace exit (cold head) | : 100 °C | 250 °C |
| Chimney (between the furnace and dust cleaning unit) | : 70 °C | 200 °C |
| Dust cleaning unit | : 60 °C | 140°C |

After completion of preheating, coarse tincal is fed to calcinations furnace in reverse flow (in the reverse direction of hot air flow) from the exit of the furnace (cold head).

Calcination furnace is an oven with reverse flow, thus supply of coarse tincal ore and flow of hot gas move in reverse direction.

Coarse mine ore is fed gradually by increasing until rated capacity is reached into rotary furnace by a system located under feeding bunker with weight/flow control. Quantity of feeding is determined based on the system capacity.

When operation is performed at the lower values of the defined temperature level, crystal water of final product is 5 moles; when operation is performed at the upper values micronized calcined tincal having about 1 mole crystal water is produced. In order to produce micronized calcined tincal including crystal water with the values between 1 to 5 moles, temperatures of the process must be adjusted to the values between minimum and maximum temperature values. Therefore; these temperature parameters must be controlled continuously by means of an automatic control system.

In addition; in order to produce micronized calcined tincal including crystal water with the desired values according to the process (1-5 moles), it will be convenient to apply heat treatment to coarse tincal in the rotary furnace with flights for 30-45 minutes. Temperature values of the chimney and dust cleaning unit within the process operation temperatures must be adjusted not to exceed the required temperature values for the heat treatment to be applied to coarse tincal in the furnace.

Coarse ore fed into the furnace is calcined after being exposed to heat treatment with removal of surface moisture and crystal water. The internal flights of furnace ensure swirling of the ore after it is raised to a certain height instead being rolled into the furnace and grinding of hardened clays in autogenic manner on expanded calcined tincal.

Calcined tincal ground to micron size by the method employed is forced to be driven toward chimney by air fan. Calcined tincal ground into micron size are separated there in three steps and average 250 micron sized calcined tincal is obtained at the furnace output (chimney) (**3**), under the dust cyclone unit (**4**) and under bag filter (**5**). The products produced in this way are stored in hoppers separately and in mixture as well after they are blended into a mixture. On the other hand, waste clay subjected to separation can not be dragged by fan owing to coarse particle size (<20 mm) and high specific density and taken from the output (**2**) at the side of the burning chamber of calcinations furnace. The clay with a content of 1 to 5 % B₂O₃ in average is obtained from the output. The air calcined tincal in micron size is discharged into the atmosphere from the funnel (**7**).

Calcined tincal ground into micron size (<250 micron) and calcined clay are subjected to separation in the furnace using difference of density. Since bulk density (0,15-0,3 g/cm3) of calcined tincal pulverized into micron size is lower compared to calcined clay (1.0 g/cm³), it is conveyed by air flow to dust cleaning unit. Here, air and dust elements are separated from each other; thereby, micronized calcined tincal is stored as final product. Calcined clay is obtained from opening of the furnace because of its high density.

The impurities such as clay obtained from hot head of furnace (furnace entrance) are removed as waste comprising 1-5 % B₂O₃.

First, surface moisture is evaporated upon contact of coarse tincal ore with the hot air inside the furnace and then a part of crystal water in the chemical composition of ore is separated based on temperature and duration to remain inside the furnace, and finally expanded ore blasts.

As the temperature in the dust cleaning unit is low, water removed from the ore and water vapor carried into the system via air and combustion gases in the dust cleaning unit condense. A part of condensed water vapor is absorbed by the micronized calcined tincal again and included by the same; thus increase in the crystal water in the body is seen.

During production by this method, important parameters requiring attention are as follows:
- *Temperatures of interior part inside calcinatory (hot head of furnace, middle and end of furnace),*
- *Temperatures of chimney and dust cleaning unit*,
- *Feeding quantity of coarse tincal ore,*
- *Volume of hot gas*,
- *Cycle of calcinatory*.

By this invention, a new product called "micron sized calcined tincal", with average values of impurities, 45-62 % B₂O₃ content, 1-5 moles of crystal water, size of a particle size <250 micron, bulk density of 0.15-0.3 g/cm³ and 3 to 12 % insoluble material content is produced ensuring temperatures of the process, and enriching basic run of mine of tincal ore with a maximum particle size of < 25 mm, 20 to 28 % content of B₂O₃ and 10 moles of crystal water, with a recovery of B₂O₃ content in a method of calcination and autogenic grinding and separation (CASG) in a single step.

### 2^{nd} Step: Method for production of Calcined Compacted Tincal;

In the second step, the method for production of compacted, calcined tincal with increased bulk density is invented by compressing micron sized calcined tincal with low density between rotating discs (plates) under pressure followed by crushing, sieving and adjusting size of the product. The method has been applied in industrial scale.

### Application of the compacted calcined Tincal production in industry

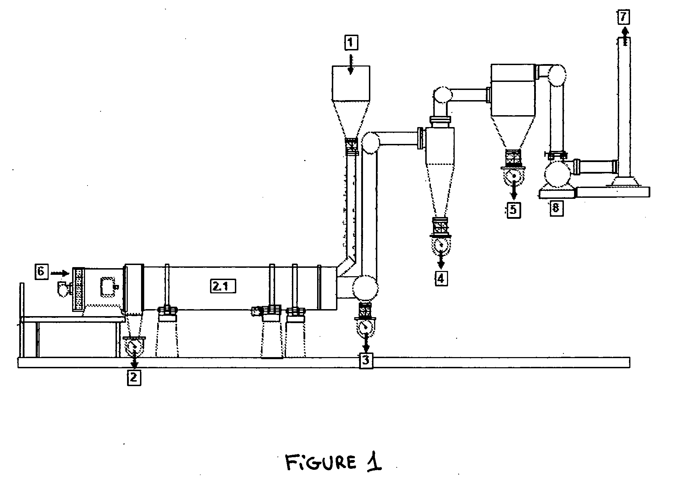

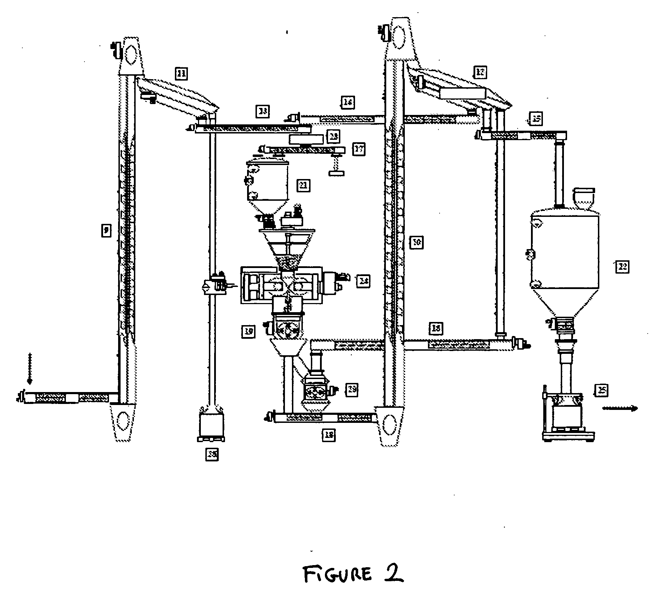

### List of the equipment used in compacting of calcined tincal in micron size (Figure 2/2)

9 Feeding elevator for calcined tincal in micron size,
10 Elevator for compacted, calcined tincal,
11 Coarse sieve, 6 mm mesh size of the sieve,
12 Product screen, double layer, three way
13 Screw conveyor
14 Screw conveyor
15 Screw conveyor
16 Screw conveyor
17 Screw conveyor (for wetting)
18 Screw conveyor
19 Crusher
20 Crusher (size adjuster)
21 Compactor, feed bunker
22 Product silo
23 Magnetic separator
24 Compactor
25 Bagging/packing system
26 Discharger from above coarse sieve

Calcined tincal with average a particle size of <250 micron and 0.15-0.3 g/cm³ bulk density is conveyed from stock silos to coarse sieve (**11**) by the elevator (**9**). After sieving, it is conveyed to magnetic separator (**23**) by the conveyor (**13**). Following separation of magnetic particles, it is transferred to wetting system (**17**) where it is humidified at required rate and then conveyed to feed bunker (**21**) for compactor.

Humidified, calcined tincal in micron size is conveyed from compactor feed bunker to rotational discs of compactor (**24**). Cycles of helical supply system and those of compactors discs are well adjusted. Pressure applied to discs is also adjusted and these adjustments are designed to permit checking.

Calcined tincal entering in between compactor discs in micron size is extracted by the discs as compacted in slabs. The product extracted in slabs is crushed by the front crusher (**19**) coupled to compactor and then fed into size adjusting crusher (**20**). Compacted calcined tincal is carried by the conveyor (**18**) and elevator (**10**) to product screen (**12**) and sieved here. The product remaining on top of the screen is fed by the conveyor (**16**) back to crusher (**20**) to be crushed to size. The product passing through screen is fed back to the inlet of compacting system by conveyor (**14**). The medium sized product gathered in between layers of sifter is conveyed to product silo (**22**) by the conveyor (**15**) and prepared for sale after they are packed in bags in the packing unit (**25**). It is possible to adjust pressure value and mesh size of the screen by selection depending on bulk density and particle size of final product.

In order to increase amount of production in the compacting studies and to produce compacted calcined tincal at desired spec values, bulk density (0,15-0,3 g/cm³) is to be increased to level of 0,4-0,6 g/cm³ in average by applying pre-condensation process before entering into the compactor.

To meet this end:
- Increase the density by mixing in the helix or another type mixer adding water or water vapor into the product in pulverized manner,
- Mix with the materials (for example metal ball) having high density without abrasion nature within a tank adding dry water vapor in pulverized manner or without charging any additive,
- Use two or more compactor in series (compressing the product -density of which is made approximately 0,4-0,6 g/cm³ by compressing in the 1^{st} compactor under low pressure- in the 2^{nd} compactor under high pressure).

In this way, air included in the micronized calcined tincal is discharged, thus dust is enabled to be inserted in the compactor by getting small in volume and compressed the dust with the bulk density of 0,4-0,6 g/cm³ in average.

Air included in the micronized calcined tincal and one of the reasons affecting negatively the compacting efficiency is discharged; thereby, the micronized calcined tincal pre-density of which is increased is compacted as a result of high pressure applied on it.

The micronized calcined tincal absorbs the water provided from the outside for bounding in order to increase the compacting efficiency of the micronized calcined tincal, which results in an increase in crystal water. However, in case the product is given in the rate of 1 % by weight, it is not caused a significant increase in the crystal water of the product and remains between the desired tolerance values (**Table 1**).

Moreover, micronized calcined tincal has exothermal reaction when it contacts with water, which results in absorbing the water provided in pulverized manner as well as creating heat. This heat increase causes evaporation of a part of the water provided. The more water is provided the more increased in the crystal water is seen. Increase in the crystal water amount also increases the compacting efficiency of the micronized calcined tincal.

In the industrial applications for the micronized calcined tincal, when compacting process is performed without increasing pre-density of the product, compacting efficiency will be low. In this case, when compacting is preferred to be performed in a single step at least 15 ton/cm pressure to be applied on disc surfaces is required. However, as mentioned above, compacting process carried out with at least 4 ton/cm pressure to be applied on the disc surfaces in the 2^{nd} step by increasing the density of the product by removing air in the product in the 1^{st} step results in compacting in higher efficiency and capacity.

The change in physical characteristics of compacted, calcined tincal products obtained by compacting micron sized calcined tincal is as follows.

| | Micron sized calcined tincal | Compacted Calcined tincal | Calcined tincal |
|---|---|---|---|
| Bulk density (gr/cm³): | 0,15-0,3 | 0,4-0,6 | 0,75-1, |
| Particle size (mm) : | 0,250 | <0,250 | <6,0 |

By this invention production of a new product called "compacted, calcined tincal" with particle size of <6 mm, bulk density of 0,75-1,0 g/cm³ and the same chemical properties with the micronized calcined tincal is achieved by compacting method using micron sized calcined tincal with particle size of <250 micron and bulk density of 0,15-0,3 g/cm³ as the raw feeding material.

**Table 1 Chemical and physical properties of coarse tincal ore, micronized calcined tincal product, compacted, calcined tincal product and clay (waste)**

| | Unit | Coarse tincal ore | Micronized calcined Tincal (New Product) | Compacted calcined tincal (New Product) | Calcined waste (at the exit of furnace) |
|---|---|---|---|---|---|
| Chemical formulation | | Na₂B₄O₇.10H₂O | Na₂B₄O₇.(*1-5*)H₂O | Na₂B₄O₇.(*1-5*)H₂O | |
| B₂O₃ content | % | 20-28 | 45-62 | 45-62 | 1,0-5,0 |
| Insoluble material content | % | 25-45 | *3-12* | *3-12* | |
| Particle size | mm | <50 | *<0,250* | <6 | <20 |
| Moisture | % | *3-8,00* | *Max 0,6* | *Max 0,6* | - |
| Bulk density | g/cm3 | 1,30 | *0,15-0,3* | *0,75-1,0* | 1,00 |
| Loss on ignition | % | Max. 45,0 | *8,0-30,0* | *8,0-30,0* | 22,0-37,0 |
| MgO | % | Max. 15,0 | *1-5,0* | *1-5,0* | 12,0-25,0 |
| CaO | % | Max. 10,0 | *1-5,0* | *1-5,0* | 8,0-25,0 |
| SiO₂ | % | Max. 15,0 | *1-3* | *1-3* | 10,0-30 |
| SO₃ | % | Max. 0,6 | *0,03-0,15* | *0,03-0,15* | 0,1-0,60 |
| Na₂O | % | Max. 12 | *15-29* | *15-29* | 1-12,0 |
| Fe₂O₃ | % | Max. 0,4 | *Max 0,20* | *Max 0,20* | 0,35-1,0 |
| Al₂O₃ | % | Max. 2,0 | *Max 0,25* | *Max 0,25* | 0,4-3,0 |

| | | | | | |
|---|---|---|---|---|---|
| **Note** : Analysis values are values obtained during coarse tincal calcinations study. Value of humidity of micronized calcined tincal at 40°C for 20 hours Loss of ignition at 900 °C for 15 minutes | | | | | |

## Claims

1. A micronized calcined tincal product **characterized by** containing 45-62 % B₂O₃ content, 8,0-30,0 % loss of ignition, 0,60 % maximum moisture, <250 µm particle size and bulk density of 0,15-0,3 g/cm³ and by having the chemical formulation of Na₂B₄O₇.(1-5)H₂O as chemical and physical properties.

2. A micronized calcined tincal product according to Claim 1 **characterized** with the content of impurities between 3-12 % by weight (clay, dolomite), and by comprising the impurities consisting of 1-5,0 % MgO, 1-5,0 % CaO, 1-3,0 % SiO₂, 0,03-0,15 % SO₃, 15-29 % Na₂O, maximum 0,20 % Fe₂O₃, maximum 0,25 % Al₂O₃.

3. A micronized calcined tincal product according to Claims 1 and 2 comprising properties of varying according to chemical analysis values of the coarse ore subjecting to calcination, having exothermal reaction when it comes into contact with water as well as absorbing water, increasing its crystal water by absorbing moisture in the atmosphere.

4. A method for production of micronized calcined tincal product according to Claims 1 to 3 **characterized** with the production procedure consisting of the steps of:
- calcining coarse tincal ore crushed to <50mm, in the rotary furnace with flights by being subjected to heat treatment which consists temperatures of furnace exit (cold head) as 100-250°C, furnace entry (hot head) as 300-550°C and, middle of furnace as 130-450°C.
- micronizing calcined tincal by means of autogenic grinding in the rotary furnace,
- subjecting to pneumatic separation procedure by means of hot air required for calcinations process in order to purify from clay (impurities) in a high rate.

5. A method for production of micronized calcined tincal according to Claim 4 **characterized** with calcination process including the steps of
- supplying coarse tincal ore into rotary furnace with integral flights in countercurrent (reverse) direction of hot air flow and
- subjecting to heat treatment for 30 to 45 minutes within the rotary furnace,
- separating crystal water in compliance with the reaction of:
Na₂B₄O₇.10H₂O + Heating → Na₂B₄O₇.(1-5)H₂O+(5-9)H₂O
- obtaining a fragile and loose formed, structure with low density of 0,15-0,30g/cm³,
- hardening of clay (gang minerals) due to loss of water increasing its density (1,0g/cm³)

6. A method for production of micronized calcined tincal according to the Claims 4 and 5 **characterized** with autogenic grinding process in which calcined clay shows grinding impact on calcined tincal by means of integral flights located in rotary furnace where resultant calcined tincal get size of < 250 micron and bulk density of 0,15-0,30g/cm³ and calcined clay get size of < 20 mm and bulk density of 1g/cm³

7. A method according to the Claims 4 to 6 **characterized in** comprising separation of calcined tincal and clay using hot air drawn by air fan inside the furnace taking advantage of differences between densities of micronized calcined tincal having size of< 250 micron and bulk density of 0,15-0,3 g/cm³ and clay, subjected to heat treatment, having bulk density of 1.0 g/cm³during first puffing of tincal or during autogenic grinding procedure

8. A method for production of micronized calcined tincal according to Claims 4-7 in which machines and equipments consists of rotational furnace with integral flights, burner, ore feding hopper, cyclone, bag filter, air fan and product conveyance element

9. A method for production of micronized calcined tincal according to Claims 4-8 **characterized** with the following operation temperatures:
Temperature of furnace entrance (hot head) IS mimmum 300°C, and maximum 550 °C,
Temperature of middle of the furnace is minimum 130 °C, and maximum 450°C,
Temperature of furnace exit (cold head) IS mimmum 100°C, and maximum 250 °C,
Temperature of chimney (between the furnace and dust cleaning unit) is minimum 70°C, and maximum 200°C,
Temperature of dust cleaning unit is minimum 60°C and maximum 140°C.

10. A method for production of micronized calcined tincal according to the Claims 4-9 characterized with the steps of
- obtaining of calcined tincal enriched with B₂O₃ from cyclone, filter and the chimney exit at the end of the furnace, and
- obtaining calcined clay that is weakened by B₂O₃ in the content of 1-5 % from entry of furnace as waste.

11. A method according to the Claims 1 to 10 **characterized** with realization of calcination-autogenic grinding-separation procedures in a single step in the same medium.

12. A method for production of micronized calcined tincal product according to Claims 4 to 11 comprising the steps of:
- condensation of water removed from the ore and water vapor carried into the system via air and combustion gases in the dust cleaning unit, due to the fact that operational temperature in the dust cleaning unit is low,
- absorption of a part of condensed water vapor again by the micronized calcined tincal,
- increase in the crystal water
- decrease in B₂O₃ content

13. Compacted calcined tincal product according to the Claims 1-12 **characterized** with contents having same chemical properties, same contents of impurities and the same chemical formulation (Na₂B₄O₇.(1-5)H₂O) with the micronized calcined tincal product (having 45-62 % B₂O₃ content, 8,0-30,0% loss on ignition; impurities by weight 3-12 % (clay, dolomite); 1-5,0 % MgO, 1-5,0 % CaO, 1-3,0 % SiO₂, 0,03-0,15 % SO₃, 15-29 % Na₂O, maximum 0,20 % Fe₂O₃, maximum 0,25 % Al₂O₃).

14. A compact calcined tincal product according to Claim 13 **characterized** with physical features of 0-0,6 % moisture, particle size of < 6 mm and bulk density of 0,75-1,0 g/cm³.

15. A method for production of compacted calcined tincal product according to the Claims 13 and 14 **characterized** with the steps of the production procedures;
- obtaining without using any binding additive,
- compacting micronized calcined tincal with low density by compressing under the high pressure on disc surfaces as at least 15 ton/cm,
- subjecting to crushing sieving procedure.

16. A method for production of compacted calcined tincal according to Claim 15 **characterized** with compacting procedure including the steps of
- supplying of calcined tincal as micronized grains in between the compactor plates,
- getting out them as strips from the discs under the high pressure as at least 15 ton/cm.

17. A method for production of compacted calcined tincal according to Claims 15 and 16 **characterized** with crushing sieving procedure including the steps of
- breaking of the strips into pieces in the front breaker coupled to compactor
- feeding crushed pieces into size adjusting crusher ;
- compacting the products which pass through the screen in sieving procedure in the second stage compactor under the sieve and
- feeding back the products not passing through the eyes of the screen and remaining on the screen to crusher for grinding into proper size and taking the crushed products with a density of 0,75-1,0 g/cm³, as final product.

18. A method for production of compacted calcined tincal according to Claim 17 **characterized** with the step of:
- applying pre-condensation process to the bulk density to increase bulk density of the micronized calcined tincal from 0,15-0,3 g/cm³ to 0,4-0,6 g/cm3, before the micronized calcined tincal enters into the compactor in order to increase compacted calcined tincal production efficiency and capacity.

19. A method for production of compacted calcined tincal according to Claims 15 to 18 **characterized** with the steps of:
- adding water or water vapor into the product in pulverized manner (at least 1 % of optimum product weight) mixing the product in the helix or another type mixer,
- mixing with the materials (for example metal ball) having high density without abrasion nature within a tank adding dry water vapor or without charging any additive to the micronized calcined tincal,
- decreasing and compressing the dust in volume by discharging air included in the micronized calcined tincal using the 1 st compactor in the pre-condensation process using two or more compactor in series,
- performing pre-condensation process by making the bulk density of the product as 0,4-0,6 g/cm³ in average in order to pre-condensation of the micronized calcined tincal.

20. A method for production of compacted calcined tincal according to Claims 15 to 19 **characterized** with the steps of:
- applying at least 4 ton/cm pressure to the disc surface in order to compacting the micronized calcined tincal subjected to the precondensation process,
- applying at least 15 ton/cm pressure to the disc surfaces in order to compacting without performing pre-condensation process.

21. A method according to the Claims 15 to 20 including the steps in which micronized calcined tincal having a particle size <250 micron in average and a bulk density of 0.15-0,3 gr/cm³ is fed into the compactor **characterized** with compacted calcined tincal product in the size of 3 mm and having a bulk density of 0,75 to 1,0 g/cm3

## Patentansprüche

1. Ein mikroniziertes, kalziniertes Borax-Produkt, **dadurch gekennzeichnet, dass** es einen Gehalt von 45-62% an B₂O₃, 8-30% Verlust der Entzündlichkeit, 0,60% maximale Feuchte, < 250 µm Partikelgröße und eine Rohdichte von 0,15-0,3 g/cm³ und dessen chemische und physikalische Eigenschaften durch die chemische Formel Na₂B₄O₇·(1-5)H₂O beschrieben werden.

2. Ein mikroniziertes, kalziniertes Borax-Produkt gemäß Anspruch 1, **dadurch gekennzeichnet, dass** es einen Gehalt an Verunreinigungen von 3-12% nach Gewicht (Ton, Dolomit) aufweist und folgende Verunreinigungen enthält: 1-5,0% MgO, 1-5,0% CaO, 1-3,0% SiO₂, 0,03-0,15% SO₃, 15-29% Na₂O, maximal 0,20% Fe₂O₃, maximal 0,25% Al₂O₃.

3. Ein mikroniziertes, kalziniertes Borax-Produkt gemäß den Ansprüchen 1 und 2, **dadurch gekennzeichnet, dass** es laut chemischer Analyse schwankende Eigenschaften des zu kalzinierenden Groberzes aufweist, und bei Kontakt mit Wasser sowohl eine exotherme Reaktion eingeht als auch Wasser absorbiert, und das seinen kristallinen Wasseranteil erhöht, indem es Feuchtigkeit aus der Luft aufnimmt.

4. Ein Verfahren zur Herstellung eines mikronizierten, kalzinierten Borax-Produkts gemäß den Ansprüchen 1 bis 3, **dadurch gekennzeichnet, dass** dieses Verfahren aus den folgenden Produktions schritten besteht:
- Kalzinierung von grobem Borerz, das unter Hitzebehandlung in einem Drehrohrofen mit Hubschaufeln auf eine Korngröße < 50 mm zerkleinert wurde, wobei die Temperaturen im Auslauf des Ofens 100-250°C ("kühles Ende"), im Einlauf 300-550°C ("heißes Ende"), und in der Hauptbrennzone des Ofens 130-450°C betragen.
- Mikronisation des kalzinierten Borax durch autogene Vermahlung im Drehrohrofen,
- Durchführung einer pneumatischen Trennung durch Zufuhr von heißer Luft, die zur Kalzinierung und für die hochgradige Reinigung des Mehls von Ton (Verunreinigungen) benötigt wird.

5. Ein Verfahren zur Herstellung von mikroniziertem, kalziniertem Borax gemäß Anspruch 4, **dadurch gekennzeichnet, dass** es einen Kalzinierungsprozess mit folgenden Schritten enthält:
- Beschickung des Drehrohrofens mit eingebauten Hubschaufeln mit grobem Borerz in entgegengesetzter (gegenläufiger) Richtung des heißen Luftstroms und
- Hitzebehandlung im Drehrohrofen über eine Dauer von 30 bis 45 Minuten,
- Abscheiden des kristallinen Wassers entsprechend der Reaktion:
Na₂B4O₇-10H₂O → Na₂B₄O₇-(1-5)H₂O + (5-9)H₂O
- Gewinnung einer fragilen und frei geformten Struktur mit geringer Dichte von 0,15-0,30 g/cm³,
- Härtung des Tons (der tauben Mineralien) durch Wasserverlust, was die Dichte erhöht (1,0 g/cm³).

6. Ein Verfahren zur Herstellung von mikroniziertem, kalziniertem Borax gemäß den Ansprüchen 4 und 5, **dadurch gekennzeichnet, dass** es einen autogenen Vermahlungsprozess enthält, in dem der kalzinierte Ton eine mahlende Wirkung auf den Borax ausübt, unterstützt durch im Drehrohrofen verbaute Hubschaufeln, wobei der dadurch der entstehende kalzinierte Borax eine Korngröße < 250 Mikrometer und eine Rohdichte von 0,15-0,3 g/cm³, und der kalzinierte Ton eine Korngröße < 20 mm und eine Rohdichte von 1,0 g/cm³ erhält.

7. Ein Verfahren gemäß den Ansprüchen 4 bis 6, **dadurch gekennzeichnet, dass** die Trennung von kalziniertem Borax und Ton mithilfe heißer Luft erfolgt, die durch Ventilatoren in den Drehrohrofen gesaugt wird, wobei der Unterschied in der Dichte zwischen dem mikronizierten, kalzinierten Borax mit < 250 Mikrometern Korngröße und einer Rohdichte von 0,15-0,3 g/cm³ und dem hitzebehandelten Ton ausgenutzt wird, der eine Rohdichte von 1,0 g/cm³ aufweist, während des ersten Einblasens des Borax oder während der autogenen Vermahlung.

8. Ein Verfahren zur Herstellung von mikroniziertem, kalziniertem Borax gemäß den Ansprüchen 4-7, **dadurch gekennzeichnet, dass** die verwendeten Maschinen und Ausrüstungen aus einem Drehrohrofen mit integrierten Hubschaufeln, Brenner, Erzeinlaufgehäuse, Zyklon, Sackfilter, Ventilator, und Produktförderanlange bestehen.

9. Ein Verfahren zur Herstellung von mikroniziertem, kalziniertem Borax gemäß den Ansprüchen 4-8, **dadurch gekennzeichnet, dass** es die folgenden Betriebstemperaturen verwendet:
Die Temperatur im Ofeneinlauf ("heißes Ende") beträgt mindestens 300°C und höchstens 550°C,
Die Temperatur in der Hauptbrennzone des Ofens beträgt mindestens 130°C und höchstens 450°C,
Die Temperatur im Ofenauslauf ("kühles Ende") beträgt mindestens 100°C und höchstens 250°C,
Die Temperatur im Abzug (zwischen dem Ofen und dem Staubabscheider) beträgt mindestens 70°C und höchstens 200°C,
Die Temperatur im Staubabscheider beträgt mindestens 60°C und höchstens 140°C.

10. Ein Verfahren zur Herstellung von mikroniziertem, kalziniertem Borax gemäß den Ansprüchen 4-9, **dadurch gekennzeichnet, dass** es die folgenden Produktionsschritte enthält:
- Gewinnung von kalziniertem, mit B₂O₃ angereichertem Borax aus dem Zyklon, dem Filter und dem Endstück des Abzugs am Ausgang des Ofens sowie
- Gewinnung von kalziniertem Ton als Abfall aus dem Eingang des Ofens, dessen Anteil an B₂O₃ um 1-5% weniger.

11. Ein Verfahren gemäß den Ansprüchen 1 bis 10, **dadurch gekennzeichnet, dass** die Umsetzung von Prozeduren zur Kalzinierung, autogenen Vermahlung und Produkttrennung in einem einzigen Arbeitsgang innerhalb desselben Mediums erfolgt.

12. Ein Verfahren zur Herstellung eines mikronizierten, kalzinierten Borax-Produkts gemäß den Ansprüchen 4 bis 11, **dadurch gekennzeichnet, dass** es die folgenden Arbeitsschritte enthält:
- Kondensation des aus dem Erz entzogenen Wassers und des Wasserdampfs, der durch Zuluft und Verbrennungsgase im Staubabscheider, bedingt durch die niedrige Betriebstemperatur des Staubabscheiders, in das System eingebracht wird,
- Erneute Absorption eines Teils des kondensierten Wasserdampfs durch den mikronizierten, kalzinierten Borax,
- Erhöhung des Anteils an kristallinem Wasser,
- Verringerung des Anteils an B₂O₃.

13. Ein verdichtetes kalziniertes Borax-Produkt gemäß den Ansprüchen 1-12, **dadurch gekennzeichnet, dass** es Inhaltsstoffe mit den gleichen chemischen Eigenschaften, gleichen Anteilen an Verunreinigungen, und der gleichen Summenformel (Na₂B₄O₇·(1-5)H₂O) wie das mikronizierte, kalzinierte Borax-Produkt enthält (welches einen Gehalt an B₂O₃ von 45-62%, 8,0-30,0% Verlust der Entzündlichkeit, einen Gewichtsanteil von 3-12% an Verunreinigungen (Ton, Dolomit), 1-5,0% MgO, 1-5,0% CaO, 1-3,0% SiO₂, 0,03-0,15% SO₃, 15-29% NaO₂, maximal 0,20% Fe₂O₃ und maximal 0,25% Al₂O₃ aufweist).

14. Ein kompaktes kalziniertes Borax-Produkt gemäß Anspruch 13, **dadurch gekennzeichnet, dass** es die physikalischen Eigenschaften von 0-0,6% Feuchte, Korngröße < 6mm und Rohdichte von 0,75-1,0 g/cm³ aufweist.

15. Ein Verfahren zur Herstellung eines verdichteten kalzinierten Borax-Produkts gemäß den Ansprüchen 13 und 14, **dadurch gekennzeichnet, dass** es die folgenden Produktionsschritte enthält:
- Gewinnung ohne Zusatz von Bindemittel
- Verdichtung des mikronizierten, kalzinierten Borax mit geringer Dichte durch Pressen unter Hochdruck zwischen den Oberflächen von Walzen mit mindestens 15 t/cm,
- Einsatz eines Verfahrens zum Brechen und Aussieben.

16. Ein Verfahren zur Herstellung von verdichtetem kalziniertem Borax gemäß Anspruch 15, **dadurch gekennzeichnet, dass** es einen Verdichtungsprozess mit den folgenden Arbeitsschritten enthält:
- Beschickung der Kompaktorplatten mit kalziniertem Borax in Form von mikronizierten Körnern,
- Gewinnung eines streifenförmigen Produkts durch Pressen unter Hochdruck zwischen den Kompaktorwalzen mit mindestens 15 t/cm.

17. Ein Verfahren zur Herstellung von verdichtetem kalziniertem Borax gemäß den Ansprüchen 15 und 16, **dadurch gekennzeichnet, dass** ein Brechen und Aussieben mithilfe folgender Arbeitsschritte erfolgt:
- Brechen der Streifen in dem an den Verdichter angeschlossenen Zerkleinerer,
- Beschickung eines Mahlwerks mit den zerkleinerten Streifen zur Anpassung der Korngröße,
- Verdichtung der Bruchstücke, die während des Aussiebens durch das Sieb fallen, in einem zweiten Verdichter, der sich unterhalb des Siebs befindet, und
- Rückführung der Produkte, die nicht durch das Sieb gefallen, sondern auf dem Sieb verblieben sind, in das Mahlwerk zur Vermahlung auf die gewünschte Größe und Entnahme des gemahlenen Produktes mit einer Dichte von 0,75-1,0 g/cm³ als Endprodukt

18. Ein Verfahren zur Herstellung von verdichtetem kalziniertem Borax gemäß Anspruch 17, **dadurch gekennzeichnet, dass** es aus folgendem Arbeitsschritt besteht:
- Anwendung eines Vorbehandlungs-Verfahrens vor der Kondensation auf die Rohdichte, zur Erhöhung der Rohdichte des mikronizierten, kalzinierten Borax von 0,15-0,3 g/cm³ auf 0,4-0,6 g/cm³ zu erhöhen, bevor der mikronizierte, kalzinierte Borax in den Verdichter geschickt wird, um die Produktionseffizienz und - kapazität des verdichteten kalzinierten Borax zu erhöhen.

19. Ein Verfahren zur Herstellung von verdichtetem kalziniertem Borax gemäß den Ansprüchen 15 bis 18, **dadurch gekennzeichnet, dass** es die folgenden Arbeitsschritte enthält:
- Zusatz von Wasser oder Wasserdampf zu dem pulverisierten Produkt (mindestens 1% des optimalen Produktgewichts) während der Vermengung in einem Schneckenmischer oder einem anderen Mischer,
- Vermischung mithilfe von Materialien (z. B. Metallkugeln), die eine hohe Dichte ohne gleichzeitige abrasive Wirkung aufweisen, in einem Tank unter Zugabe von Trockendampf oder ohne jegliche Zugabe von Zusätzen zu dem mikronizierten, kalzinierten Borax,
- Verringerung und Kompression des Mehlvolumens durch Austreiben der in dem mikronizierten, kalzinierten Borax enthaltenen Luft durch Verwendung des ersten Verdichters aus dem Vorbehandlungs-Verfahrens, wobei zwei Verdichter hintereinander verwendet werden,
- Anwendung des Vorbehandlungs-Verfahrens zur Einstellung der Rohdichte auf durchschnittlich 0,4-0,6 g/cm³ zur Vorbehandlung des mikronizierten, kalzinierten Borax.

20. Ein Verfahren zur Herstellung von verdichtetem kalziniertem Borax gemäß den Ansprüchen 15 bis 19, **dadurch gekennzeichnet, dass** es die folgenden Arbeitsschritte enthält:
- Anwendung von mindestens 4 t/cm Pressdruck auf die Walzenoberflächen zur Verdichtung des mikronizierten, kalzinierten Borax, der das Vorbehandlungs-Verfahren durchlaufen hat,
- Anwendung von mindestens 15 t/cm Pressdruck auf die Walzenoberflächen zur Verdichtung ohne Anwendung des Vorbehandlungs-Verfahrens.

21. Ein Verfahren gemäß den Ansprüchen 15 bis 20, **dadurch gekennzeichnet, dass** es mithilfe der Arbeitsschritte, in denen der mikronizierte, kalzinierte Borax mit einer durchschnittlichen Korngröße < 250 Mikrometer und einer Rohdichte von 0,15-0,3 g/cm³ dem Verdichter zugeführt wird, ein verdichtetes mikroniziertes, kalziniertes Borax-Produkt mit einer Korngröße von 3 mm und einer Rohdichte von 0,75 bis 1,0 g/cm³ erzeugt.

## Revendications

1. Un produit du tinkal calciné micronisé, **caractérisé par** un contenu de 45-62% du B₂O₃, une perte par calcination de l'ordre de 8,0-30,0%, maximum humidité de 0,60%, une taille de particule de <250 µm, et une densité volumétrique de 0,15-0,3 g/cm³ aussi bien qu'une formulation chimique du Na₂B4O7.(1-5)H₂O en tant que des propriétés chimiques et physiques.

2. Un produit du tinkal calciné micronisé selon la revendication 1, **caractérisé par** un contenu des impuretés entre 3-12% par poids (argile, dolomite) et le fait qu'il contient des impuretés consistant en 1-5,0 % MgO, 1-5,0 % CaO, 1-3,0 % SiO₂, 0,03-0,15 % SO₃, 15-29 % Na₂O maximum 0,20 % Fe₂O₃, maximum 0,25 % Al₂O₃.

3. Un produit du tinkal calciné micronisé selon les revendications 1 et 2, possédant des propriétés variables selon les valeurs de l'analyse chimique du minerai granuleux soumis à la calcination, possédant une réaction exothermique quant au contact avec de l'eau aussi bien que l'absorption de l'eau en augmentant sa quantité de l'eau cristallisée en absorbant l'humidité dans l'atmosphère.

4. Une méthode pour la production du produit du tinkal calciné micronisé selon les revendications 1 à 3, **caractérisée par** la procédure de production consistant en les étapes suivantes:
- a calcination du minerai du tincal granuleux écrasé à <50 mm dans un fourneau rotatif avec vol en étant soumise au traitement thermique consistant en température de la sortie de four (tête froide) comme 100-250°C, l'entrée de four (tête chaude) comme -550°C, et au sein du four comme -450°C.
- la micronisation du tinkal calcinée au moyen de broyage autogène dans le fourneau rotatif,
- la soumission au procédure de séparation pneumatique au moyen de l'air chaude requise pour les processus de calcination afin de purifier l'argile (impuretés) au taux haut.

5. Une méthode pour la production du produit du tinkal calciné micronisé selon la revendication 4, **caractérisée par** la procédure de calcination consistant en les étapes suivantes:
- le remplacement du minerai de tinkal granuleux dans le four rotatif avec des vols intégrants dans la direction (inverse) du flux de l'air chaude, et
- la soumission au traitement thermique pendant 30 à 45 minutes à l'intérieur du fourneau rotatif,
- la séparation de l'eau cristallisée conformément à la réaction suivante:
Na₂B₄0₇.10H₂0 + Chauffage → Na₂B₄O7.(1-5)H₂O + (5-9)H₂O
- l'obtention d'une structure fragile et formée lâche avec une densité de 0,15- 0,30g/cm³,
- le durcissement de l'argile (minéraux de gangue) à cause d'une perte de l'eau augmentant sa densité (1,0 g/cm³)

6. Une méthode pour la production du produit du tinkal calciné micronisé selon les revendications 4 et 5, **caractérisé par** le procédé du broyage autogène dans lequel montre l'argile calcinée un impact de broyage sur le tinkal calciné au moyen de vols intégrants placés à l'intérieure du fourneau rotatif où le tinkal calciné résultant obtient une taille de < 250 microns et une densité volumétrique de 0,15-0,30g/cm³, et l'argile calcinée obtient une taille de < 20 mm et une densité volumétrique de 1 g/cm³.

7. Une méthode selon les revendications 4 à 6, **caractérisée en ce qu'**elle comprend la séparation du tinkal calciné et l'argile en utilisant de l'air chaude aspirée par le ventilateur à l'intérieure du fourneau en bénéficiant des différences entre les densités du tinkal calciné micronisé possédant un taille de <250 microns et une densité volumétrique de 0,15-0,3 g/cm³ et l'argile, soumise au traitement thermique, possédant une densité volumétrique de 1.0 g/cm³ pendant première souffle du tinkal ou pendant le procédé de broyage autogène.

8. Une méthode pour la production du tinkal calciné micronisé selon les revendications 4 à 7 dans laquelle comprennent les machines et les équipements un fourneau rotatif avec vols intégrants, un bruleur, une trémie d'alimentation du minerai, un cyclone, un filtre à manche, un ventilateur, et un élément de transport du produit.

9. Une méthode pour la production du produit du tinkal calciné micronisé selon la revendication 4 à 8, **caractérisée par** les températures de fonctionnement ci-dessous:
- La température de l'entrée du fourneau (tête chaude) est minimum 300°C and maximum 550 °C,
- La température au sein du fourneau est minimum 130°C and maximum 450°C,
- La température de la sortie du fourneau (tête froid) est minimum 100°C and maximum 250 °C,
- La température de cheminée (entre le fourneau et l'unité de nettoyage de poussière) est minimum 70°C and maximum 200°C,
- La température de l'unité de nettoyage de poussière est minimum 60°C and maximum 140°C.

10. Une méthode pour la production du produit du tinkal calciné micronisé selon la revendication 4 à 8, **caractérisée par** les étapes suivantes:
- l'obtention du tinkal calciné enrichi du B₂O₃ au moyen du cyclone, du filtre, et de la sortie de cheminée à l'extrémité du fourneau, et
- l'obtention de l'argile calcinée étant diluée par B₂O₃ dans le contenu de l'ordre de 1-5% de l'entrée du fourneau comme déchet.

11. Une méthode selon les revendications 1 à 10, **caractérisée par** la réalisation des procédures de calcination - broyage autogène - séparation dans une seule étape dans le même milieu.

12. Une méthode pour la production du produit du tinkal calciné micronisé selon la revendication 4 à 11, consistant en les étapes suivantes:
- la condensation de l'eau retirée du minerai et la vapeur de l'eau transportée dans le système par l'air et les gaz de combustion dans l'unité de nettoya de poussière à cause de faible température de fonctionnement dans l'unité de nettoyage de poussière,
- l'absorption d'une part de la vapeur de l'eau condensée par tinkal calciné micronisé,
- l'augmentation de l'eau cristallisée,
- la réduction du contenu B₂O₃.

13. Le produit de tinkal calciné condensé selon les revendications 1-12, **caractérisé par** les contenus possédant les mêmes propriétés chimiques, les mêmes contenus d'impuretés, et la même formulation chimique (Na2B₄07.(1-5)H20) avec le produit de tinkal calciné micronisé (possédant un contenu de 45-62 % B₂O₃, une perte par calcination de 8,0-30,0%, des impuretés en poids de 3-12% (argile, dolomite), 1-5,0 % MgO, 1-5,0 % CaO, 1-3,0 SiO₂, 0,03-0,15% SO₃, 15-29% Na₂O, maximum 0,20 % Fe₂O₃, maximum 0,25 % Al₂O₃).

14. Un produit compact de tinkal calciné selon la revendication 13, **caractérisé par** les propriétés physiques de l'humidité de 0-0,6%, la taille des particules de < 6 mm, et une densité volumétrique de 0,75-1,0 g/cm³.

15. Une méthode pour la production du produit du tinkal calciné compacté selon les revendications 13 et 14, **caractérisée par** les étapes de production suivantes :
- l'obtention sans l'utilisation d'un additif liant quelconque,
- le compactage du tinkal calciné micronisé à faible densité en compressant sous haute pression telle qu'au moins 15 tonne/cm sur les surfaces de disque,
- la soumission à la procédure de broyage et tamisage.

16. Une méthode pour la production du produit du tinkal calciné compacté selon la revendication 15, **caractérisée par** la procédure de compactage consistant en les étapes suivantes:
- l'alimentation du tinkal calciné comme grains micronisées entre plaques de compaction,
- leur extraction des disques comme bandes sous haute pression telle qu'au moins 15 tonne/cm.

17. Une méthode pour la production du produit du tinkal calciné compacté selon les revendications 15 et 16, **caractérisée par** la procédure de broyage et tamisage comportant les étapes suivantes:
- la rupture des bands en forme des pièces dans le briseur front accouplé au compacteur
- l'alimentation de pièces broyées à l'intérieur du broyeur de réglage de taille;
- le compactage des produits traversant le tamis dans la procédure de tamisage dans la deuxième étape de compactage sous le tamis; et
- l'alimentation des produits ne traversant pas les mailles du tamis et restant sur le tamis au broyeur encore pour le broyage dans une taille appropriée et l'obtention des produits broyés comme produit final à une densité de 0,75-1,0 g/cm³.

18. Une méthode pour la production du produit du tinkal calciné compacté selon la revendication 17, **caractérisée par** l'étape suivante:
- l'application de la procédure de condensation préalable à la densité volumétrique pour augmenter la densité volumétrique du tinkal calciné micronisé du 0,15-0,3 g/cm³ au 0,4-0,6 g/cm3, avant de l'entrée du tinkal calciné micronisé à l'intérieur du compacteur afin d'augmenter l'efficacité et la capacité de la production du tinkal calciné compacté.

19. Une méthode pour la production du produit du tinkal calciné compacté selon les revendications 15 à 18, **caractérisée par** l'étape suivante:
- l'addition de l'eau et du vapeur de l'eau dans le produit dans une manière pulvérisée (au moins 1% du poids optimum de produit) en mélangeant le produit dans un mélangeur de type hélix ou autre,
- le mélange avec les matériaux (par exemple, bille métallique) à une haute densité sans l'abrasion naturelle à l'intérieure d'un réservoir en ajoutant du vapeur sec de l'eau ou sans chargeant aucun additif au tinkal calciné micronisé,
- la réduction et le compactage du poussière en déchargeant l'air contenu dans le tinkal calciné micronisé en utilisant le le compacteur dans le procédé de condensation préliminaire en utilisant deux ou plusieurs compacteurs en série,
- la réalisation de la procédure de condensation préliminaire en prenant la densité volumétrique du produit comme 0,4-0,6 g/cm³ en moyenne afin de faire la condensation préliminaire du tinkal calciné micronisé.

20. Une méthode pour la production du produit du tinkal calciné compacté selon les revendications 15 à 19, **caractérisée par** l'étape suivante:
- l'application d'une pression d'au moins 4 tonne/cm sur la surface de disque afin de compacter le tinkal calciné micronisé soumis à la procédure de condensation préliminaire en appliquant une pression d'au moins 15 tonne/cm sur les surfaces de disque pour but de compacter sans réalisant l'étape de la procédure de condensation préliminaire.

21. Une méthode selon les revendications 15 à 20 comportant les étapes dans lesquelles on alimente le tinkal calciné micronisé à une taille de particule de l'ordre de <250 microns en moyenne et une densité volumétrique de l'ordre de 0.15-0,3 gr/cm³ dans le compacteur, **caractérisée par** le produit de tinkal calciné compacté de taille de 3 mm et possédant une densité volumétrique de l'ordre de 0,75 à 1,0 g/cm3.
